# FASCICULE DE BREVET EUROPEEN

(11) **EP 1 843 225 B1**
(45) Date de publication et mention de la délivrance du brevet: **15.07.2009**
(21) Numéro de dépôt: 06007364.0
(22) Date de dépôt: 07.04.2006
(51) Int. Cl.: G04B 5/02, G04B 13/00, F16H 1/00, F16D 41/06, F16D 41/07

(54) **Mécanisme inverseur pour entraînement rotatif unidirectionnel d'un mobile**
Mechanischer Wechsler zum Drehantreiben eines Rades aus einer einzelnen Richtung
Mechanical reverser for rotational and unidirectional driving of a wheel

(43) Date de publication de la demande: 10.10.2007
(73) Titulaire: ETA SA Manufacture Horlogère Suisse, 2540 Grenchen (CH)
(72) Inventeur: Helfer, Jean-Luc, 2550 Nidau (CH); Conus, Thierry, 2543 Lengnau (CH)
(74) Mandataire: Rossand, Isabelle

(56) Documents cités:
- CH-A- 400 017
- CH-A- 412 721
- DE-A1- 2 851 735
- GB-A- 814 535
- US-A- 2 645 319

## Description

### DOMAINE TECHNIQUE

La présente invention a pour objet un mécanisme inverseur qui permet d'entraîner le premier mobile d'une chaîne cinématique dans un seul sens, quel que soit le sens de rotation du pignon d'entraînement. De tels dispositifs inverseurs sont notamment utilisés pour le remontage automatique du ressort de barillet d'une montre mécanique, ou pour entraîner la génératrice d'un quelconque petit appareil électronique portable, le pignon d'entraînement étant généralement mis en mouvement par une masse oscillante.

### ETAT DE LA TECHNIQUE

De nombreux dispositifs de remontage automatique par masse oscillante et mécanisme inverseur ont déjà été proposés. Ces dispositifs reposent sur les principes de mécanismes à cames ou à leviers-cliquets, de mécanismes à changement d'engrenage sur deux roues en prise, dont une seule est motrice, ou de mécanismes à galets, comme décrit par exemple dans le brevet CH 305 463, ou bras/cliquets comme décrit par exemple dans le modèle d'utilité japonais 18706/72 ou de mécanisme à anneau de frottement comme décrit par exemple dans le brevet DE 28 51 735. De tels dispositifs ont l'inconvénient d'être relativement encombrants et de nécessiter l'assemblage d'un assez grand nombre de pièces, et d'avoir des forces de frottement élevées dans le sens libre à grande vitesse.

### RESUME DE L'INVENTION

La présente invention vise donc à pallier les inconvénients de l'art antérieur précité en procurant un mécanisme inverseur comportant un plus petit nombre de pièces à assembler et pouvant donc être produit à moindre coût, tout en ayant des performances supérieures ou égales à celles des dispositifs de l'art antérieur.

A cet effet le mécanisme inverseur, interposé entre la première roue d'une chaîne cinématique devant être entraînée dans un seul sens et le pignon moteur à mouvement alternatif, comprend une roue menante en prise avec ledit pignon moteur, montée sur un axe de rotation au dessus d'une roue menée montée sur le même axe et en prise, directement ou indirectement avec la première roue de la chaîne cinématique. La roue menée comporte une cuvette ouverte vers la roue menante pour loger un dispositif d'embrayage, réalisé en un matériaux élastique, permettant de coupler/découpler les deux roues en fonction du sens de rotation du pignon moteur. Le dispositif d'embrayage est caractérisé en ce qu'il comporte au moins un bras de blocage recourbé dont une extrémité a un point de pivotement sur la roue menante et dont l'autre extrémité a un point d'appui contre la paroi interne de la cuvette de la roue menée sous l'action d'un ressort venant de matière avec ledit bras.

Selon un premier mode de réalisation, le pivotement du bras s'effectue autour d'un axe fixe solidaire de la roue menante, et selon un deuxième mode de réalisation, qui sera expliqué plus en détails plus loin, le point de pivotement peut se déplacer le long d'une came solidaire de la roue menante.

Dans ce mécanisme "simple sens", et notamment dans le deuxième mode de réalisation, le fonctionnement peut encore être amélioré en prévoyant au niveau du bras de blocage une extension de guidage procurant un troisième point de positionnement dudit bras de blocage, une extension d'équilibrage permettant de réduire, voire de supprimer le balourd, et/ou un dispositif de sécurité limitant la course du point de pivotement le long de la came en cas de débattements trop violents.

Le mécanisme inverseur brièvement décrit ci-dessus est dit "simple sens" car il n'est moteur que pour une seule alternance du pignon d'entraînement. Il est toutefois possible d'avoir un dispositif inverseur "double sens" en couplant deux mécanismes inverseurs "simple sens" ayant des dispositifs d'embrayage inversés. Dans un mode de réalisation préféré, les deux mécanismes inverseurs sont superposés et les deux roues menées ne forment qu'une seule pièce.

### BREVE DESCRIPTION DES DESSINS

D'autres caractéristiques et avantages de la présente invention apparaîtront dans la description suivante de divers modes de réalisation, donnés à titre illustratif et non limitatif, en référence aux dessins annexés dans lesquels :
- la figure 1 est une vue en perspective d'un premier mode de réalisation;
- la figure 2 est une coupe brisée selon la ligne II-II de la figure 1;
- la figure 3 est une représentation en coupe d'une variante du premier mode de réalisation;
- la figure 4 est une vue en perspective d'un deuxième mode de réalisation;
- la figure 5 est une coupe brisée selon la ligne V-V de la figure 4;
- la figure 6 représente en perspective une première variante du deuxième mode de réalisation;
- la figure 7 représente en perspective une deuxième variante du deuxième mode de réalisation;
- la figure 8 représente en perspective une troisième variante du deuxième mode de réalisation;
- la figure 9 représente en perspective une quatrième variante du deuxième mode de réalisation;
- la figure 10 représente en vue de dessus simplifiée le dispositif d'embrayage avant montage;
- la figure 10A représente un détail de construction de la figure 10;
- les figures 11 et 12 permettent d'expliquer le fonctionnement du mécanisme inverseur;
- la figure 13 est une vue en perspective d'un troisième mode de réalisation;
- la figure 14 est une coupe brisée selon la ligne XIV-XIV de la figure 13;
- la figure 15 est une vue en perspective d'un quatrième mode de réalisation, et
- la figure 16 est une coupe brisée selon la ligne XVI-XVI de la figure 15.

### DESCRIPTION DETAILLEE DE L'INVENTION

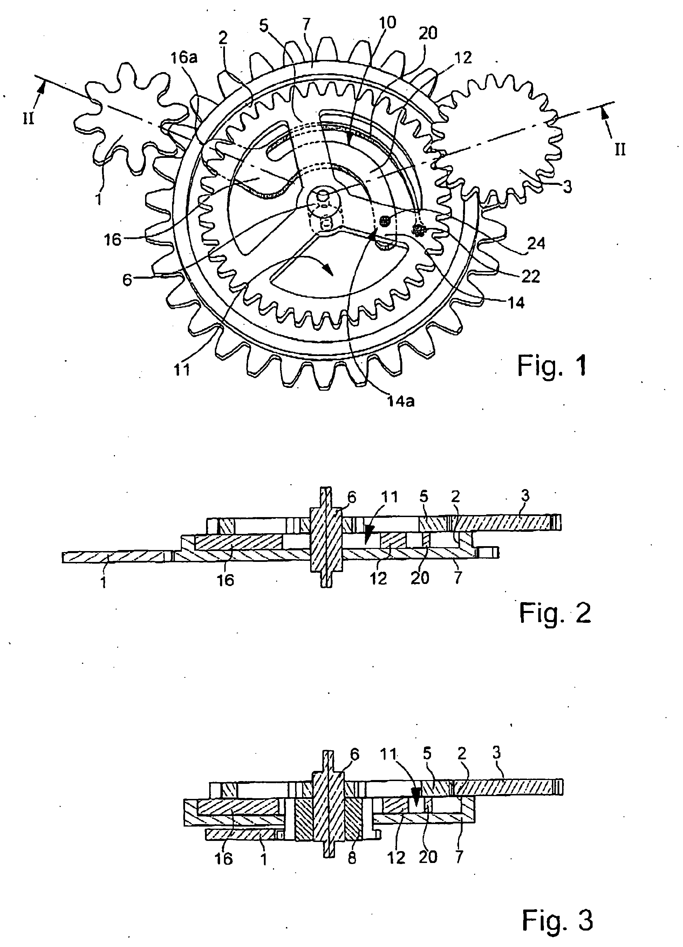

En se référant d'abord aux figures 1 et 2, on décrit ci-après un premier mode de réalisation d'un mécanisme inverseur selon l'invention, qui sera illustré à titre d'exemple par un mécanisme de remontage automatique d'une montre mécanique par une masse oscillante dont le pignon moteur 3 agit dans un seul sens pour entraîner le premier mobile 1 d'une chaîne cinématique de réduction (non représentée) dont le dernier mobile est en prise avec le rochet du barillet.

Le pignon moteur 3 de la masse oscillante engrène avec une première roue dentée menante 5 montée folle sur un axe de rotation 6 pivoté entre une platine et un pont (non représentés), ou entre toute autre armature permettant de positionner les pièces d'un mécanisme horloger les unes par rapport aux autres.

Une deuxième roue menée 7 est positionnée en dessous de la roue menante 5 en étant également montée folle sur l'axe de rotation 6. Elle comporte également une denture en prise avec le premier mobile 1 de la chaîne cinématique.

En se référant maintenant à la coupe de la figure 2, on voit que la roue menée 7 comporte une cuvette 11 dont l'ouverture est orientée vers la roue menante 5. Cette cuvette 11 est destinée à loger un dispositif d'embrayage 10 dont le mode de réalisation est décrit ci-après.

Le dispositif d'embrayage 10, comporte fondamentalement deux parties, pouvant être réalisées en une seule pièce, ou constituer deux pièces séparées.

La première partie est constituée par un bras de blocage 12 qui, dans ce mode de réalisation, est recourbé, dont une extrémité 14, désignée par "pied", comporte un point de pivotement 14a dans la roue menante 5, par exemple autour d'un axe 24 chassé dans ladite roue. L'autre extrémité 16 du bras 12, désignée par "tête", procure un point d'appui 16a contre la paroi interne 2 de la cuvette 11. Cet appui est assuré par un ressort 20 reliant la tête 16 et un point de fixation 22 dans la roue menante 5. Ce ressort 20 a été représenté avec une forme en arc de cercle entre ses deux points de jonction, mais il est bien évident qu'il pourrait avoir un tout autre contour en fonction des impératifs de construction, sans sortir du cadre de la présente invention.

Comme on peut le voir sur la représentation en perspective de la figure 1, l'angle formé par l'axe 6 avec le point de pivotement 14a et le point d'appui 16a est un angle obtus, légèrement inférieur à 180°, faisant que le bras permet la libre rotation de la roue menante 5 dans un sens, sans entraîner la roue menée 7, et entraîne au contraire la roue menée 7 lorsque la roue menante 5 tourne dans l'autre sens, comme cela sera décrit plus en détails en référence au deuxième mode de réalisation.

La représentation en coupe de la figure 3 concerne une variante du premier mode de réalisation concernant l'emplacement des prises de force sur la roue menante 5 et sur la roue menée 7. Comme on peut le comprendre, l'essentiel est que la roue menante 5 et la roue menée 7 soient libres en rotation l'une par rapport à l'autre lorsque le mécanisme d'embrayage 10 n'intervient pas. Dans l'exemple représenté la roue menée 7 ne comporte plus de denture mais elle est chassée sur un pignon additionnel 8, lui-même solidaire de l'axe 6, tandis que la roue menante 5 reste montée folle sur ledit axe 6. Le premier mobile 1 de la chaîne cinématique engrène alors avec le pignon additionnel 8. De façon équivalente (non représentée) le pignon additionnel 8 pourrait être rendu solidaire de la roue menante 5, en étant ou non chassé sur l'axe 6, la roue menée 7 étant alors montée folle sur ledit axe 6. Ces variantes de construction peuvent être simplement imposées par l'espace devant être réservé aux autres mobiles du mouvement horloger.

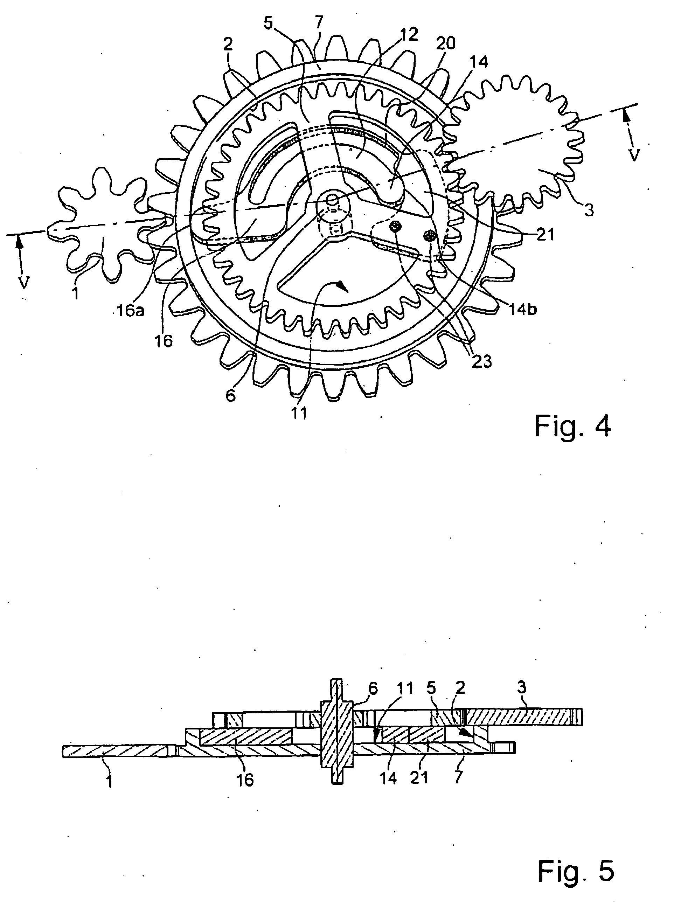

En se référant maintenant aux figures 4 et 5, on décrit ci-après un deuxième mode de réalisation qui diffère de celui précédemment décrit par l'agencement du dispositif d'embrayage 10. Les détails de construction communs ne seront donc pas davantage décrits et porteront les mêmes références.

Comme on peut le voir sur la figure 4, le pied 14 du bras de blocage 12 n'est plus pivoté dans la roue menante 5, mais son point de pivotement 14b peut se déplacer sur le bord d'une came de guidage 21, constituée par une plaque rendue solidaire de la roue menante 5, par exemple au moyen de deux chevilles 23. Le ressort 20 relie la tête 16 et la came 21 pour maintenir le point d'appui 16a en contact avec la paroi 2 de la cuvette 11. Le contour de la came 21 est conçu pour réduire au minimum "l'angle mort", c'est à dire l'angle que doit parcourir la roue menante 5 avant d'entraîner la roue menée 7. Avec le dispositif d'embrayage selon l'invention, cet angle mort est réduit à une valeur inférieure à 2° alors qu'elle est de l'ordre de 26° dans les mécanismes inverseurs de l'art antérieur.

La courbure de la came est par exemple de type exponentiel, mais d'autres choix à la portée de l'homme de métier sont possibles. Le fonctionnement de ce mécanisme d'embrayage est expliqué plus loin après la description d'une première variante de ce deuxième mode.

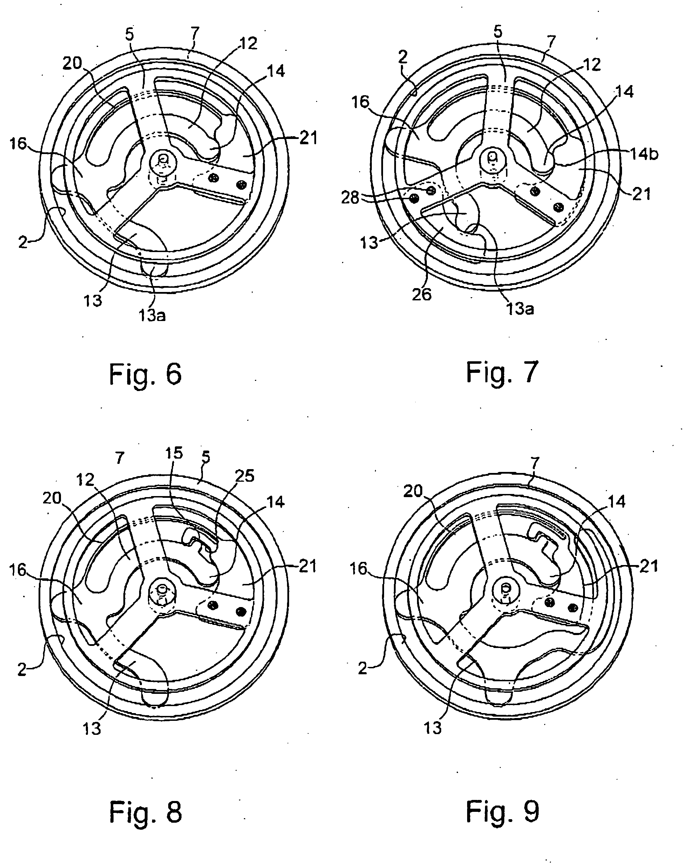

La figure 6 est une représentation simplifiée d'une première variante du deuxième mode de réalisation. Comme on peut le voir la tête 16 du bras de blocage 12 est prolongée, à l'opposé de la jonction avec le ressort 20, par une extension de guidage 13 formant un troisième point d'appui 13a sur la paroi 2 de la cuvette 11 permettant de mieux contrôler le positionnement du point d'appui de blocage 16a. Cette variante sera reprise plus loin pour mieux faire comprendre le fonctionnement du mécanisme inverseur selon l'invention.

La figure 7 est une représentation simplifiée d'une deuxième variante qui diffère de la variante précédente en ce que l'extension de guidage 13 n'est plus guidée par la paroi 2 de la cuvette 11 mais par une plaque de guidage 26 située dans la cuvette 11, en dessous de la roue menante 5 et solidaire de celle-ci par exemple au moyen de chevilles 28.

La figure 8 est une représentation simplifiée d'une troisième variante qui peut également intégrer l'une ou l'autre des deux variantes précédentes. Dans cette variante un dispositif de sécurité est prévu pour éviter que le point de pivotement 14b ne sorte de la came 21 en cas de forts débattements de la roue menante 5. Ce dispositif de sécurité consiste, dans l'exemple représenté, en un bec 15, formé à partir du pied 14 du bras de blocage 12, qui coopère avec un décrochement 25 formé dans un prolongement de la plaque formant la came 21. L'homme de métier peut évidemment concevoir un autre agencement de ce dispositif de sécurité, sans sortir du cadre de la présente invention.

La figure 9 est une représentation simplifiée d'une quatrième variante qui peut également intégrer les variantes précédentes. De façon connue, il est souhaitable que le centre de gravité d'une pièce en mouvement coïncide avec son axe de rotation pour éviter un balourd défavorable au rendement du dispositif. Or, dans les constructions qui viennent d'être décrites, il est clair que le centre de gravité de l'ensemble formant le dispositif d'embrayage 10 ne peut pas coïncider avec l'axe de rotation 6. Cette quatrième variante permet de remédier à cet inconvénient en prévoyant au moins une extension d'équilibrage 17 dont la géométrie est calculée pour amener en coïncidence le centre de gravité du dispositif d'embrayage 10 et le centre de l'axe de rotation 6. Selon la forme du bras de blocage 12, il est également possible de prévoir plus d'une extension d'équilibrage.

Le dispositif d'embrayage qui vient d'être décrit, selon l'un ou l'autre des modes de réalisation est un dispositif monobloc réalisé en un matériau devant présenter une certaine élasticité en raison du ressort 20. Il peut être fabriqué en métal ou alliage par des méthodes connues de micro-usinage, telles que le découpage par laser, l'électroérosion à fil, ou par des méthodes utilisées pour la fabrication de MEMs, telle que la technique LIGA. Le matériau utilisé peut également être non métallique tel que le silicium, le dioxyde de silicium, le verre, ou autres composés du silicium, le quartz ou le diamant en utilisant par exemple les méthodes de masquage et attaque chimique pour obtenir le contour désiré. Ces méthodes de fabrication sont bien connues de l'homme de l'art et ne seront donc pas décrites davantage.

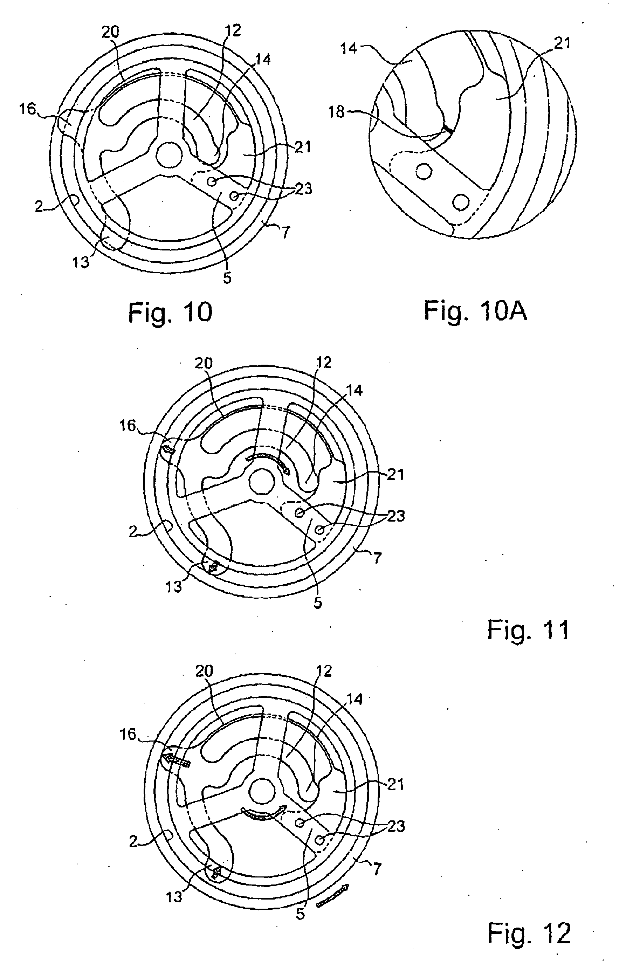

On se réfère maintenant aux figures 10, 11, 12 pour expliquer le fonctionnement du mécanisme inverseur précédemment décrit dans la variante correspondant à la figure 6.

La figure 10 correspond au dispositif d'embrayage 10, après fixation de la came de guidage 21 dans la roue menante 5 au moyen des chevilles 23, mais avant la mise en place définitive dans la cuvette 11 de la roue menée 7. Comme on peut le voir, le pied 14 du bras 12 n'est pas en contact avec la came 21, et la tête 16 ainsi que l'extrémité de l'extension de guidage 13 s'étendent au-delà de la paroi interne 2 de la cuvette 11. Au montage définitif le ressort 20 forcera la tête 16 et l'extension guidage 13 à venir en appui contre la paroi interne 11a de la cuvette 11.

Pour faciliter la manipulation avant montage et éviter de déformer le dispositif d'embrayage 10 en dehors du plan, il peut être prévu lors de la fabrication, comme représenté à la figure 10A, de former un pont de matière 18 entre le pied 14 et la came 21, ledit pont 18 étant alors détruit juste avant mise en place définitive.

La figure 11 représente le même dispositif d'embrayage, après montage lorsque le dispositif est entraînée en rotation "sens libre", c'est-à-dire lorsque la roue menante 5 tourne dans le sens horaire indiquée par la flèche au centre, sans entraîner la roue menée 7. En effet la pression exercée par la tête 16 du bras de blocage 12 et par l'extension de guidage 13 (représentée par les petites flèches) sur la paroi interne 2 de la cuvette 11 n'est pas suffisante et permet seulement un glissement des points de contact le long de ladite paroi interne 2.

Inversement, comme représenté à la figure 12, lorsque la roue menante 5 tourne dans le sens antihoraire indiqué par la flèche au centre, la pression exercée par la tête 16 est suffisante pour provoquer un blocage et entraîner la roue menée 7. Comme on peut le voir, l'extrémité de l'extension de guidage s'écarte légèrement de la paroi 2 de la cuvette 11, cet écart étant exagéré sur la figure 12. De même le point de contact du pied 14 se déplace légèrement le long de la came 21 en sens inverse du sens de rotation de la roue menante 5 pour augmenter l'effet de blocage.

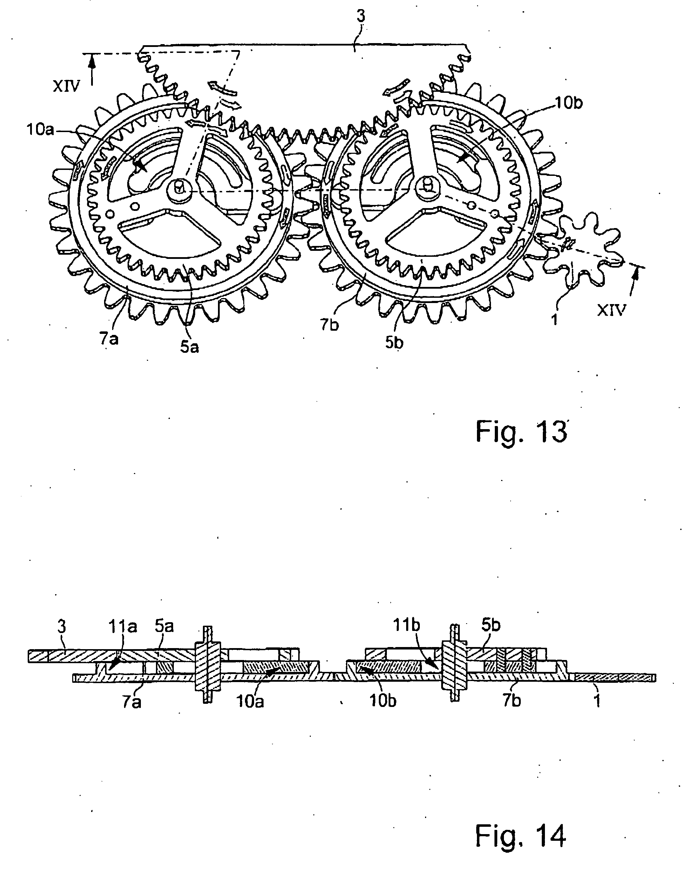

En se référant maintenant aux figures 13 à 16, on décrit ci-après un troisième et un quatrième mode de réalisation concernant un mécanisme inverseur "double sens" qui consiste fondamentalement à coupler un premier mécanisme inverseur simple sens, dont les références seront suivies de la lettre "a" et un deuxième mécanisme simple sens dont les références seront suivie de la lettre "b".

Selon le troisième mode de réalisation, représenté aux figures 13 et 14, les deux mécanismes inverseurs sont situés dans un même plan, les roues menantes 5a, 5b engrènent toutes deux avec le pignon d'entraînement 3, les roues menées 7a, 7b engrènent l'une avec l'autre et les dispositifs d'embrayage 10a, 10b sont disposés dans leurs cuvettes respectives 11 a, 11 b pour avoir des actions opposées. Dans cette construction les dispositifs d'embrayage 10a, 10b sont des images de miroir l'une de l'autre. Il est bien évident, sans sortir du cadre de l'invention, que d'autres agencements sont possibles, par exemple en utilisant une roue de renvoi qui permettrait de les disposer encore soit de façon planaire, soit de façon superposée, les dispositifs d'embrayage 10a, 10b ayant alors la même orientation.

Sur la figure 13 on a représenté par une flèche en trait plein le sens de rotation des mobiles lorsque l'alternance du pignon moteur 3 s'effectue dans le sens horaire, et par une flèche à doubles traits, lorsque l'alternance s'effectue en sens contraire.

Lorsque l'alternance s'effectue dans le sens horaire, le pignon 3 entraîne la roue menante 5b qui entraîne à son tour par blocage la roue menée 7b, qui elle même entraîne le premier pignon 1 de la chaîne cinématique dans le sens horaire. La roue menée 7b engrène également avec la roue menée 7b et n'est en effet pas gênée en rotation par la roue menante 5a, qui est entraînée en rotation également par le pignon moteur 3, mais qui tourne en sens inverse de la roue menante 5a en étant libre en rotation.

Lorsque le pignon d'entraînement 3 a une alternance inverse en sens antihoraire, on voit que le premier mobile 1 de la chaîne cinématique est toujours entraîné dans le même sens par la roue menée 7b, elle-même entraînée par la roue menée 7a, elle-même entraînée par blocage par la roue menante 5a, la roue menante 5b du deuxième mécanisme 10b étant libre en rotation par rapport à la roue menante 7b.

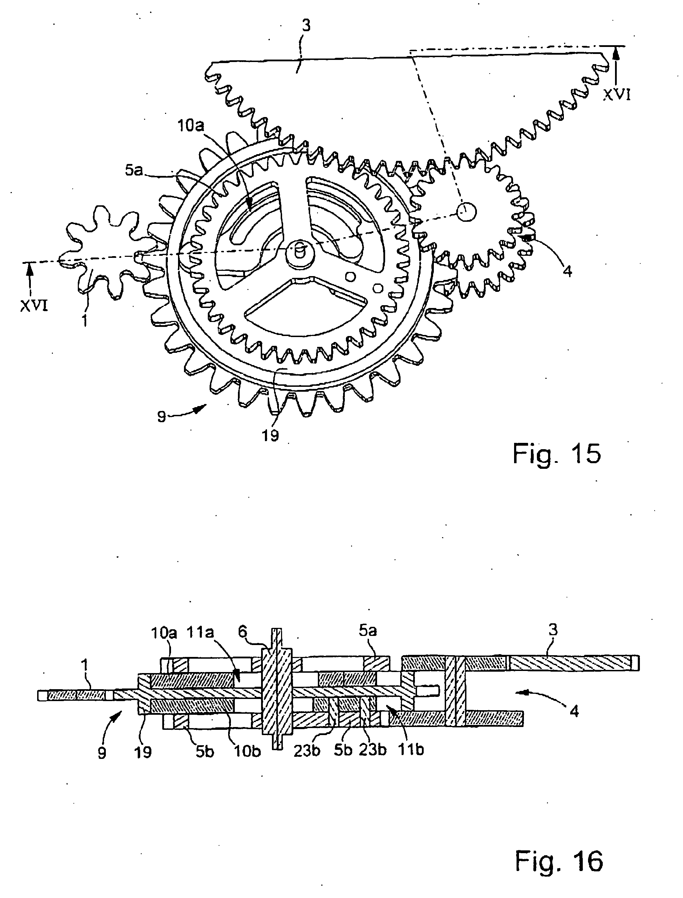

Les figures 15 et 16 permettent de décrire un quatrième mode de réalisation, qui peut également être compris comme une variante du mode de réalisation précédent lorsque les deux mécanismes d'embrayage sont superposés. Comme on peut le voir, le pignon moteur 3 engrène avec la roue menante 5a du premier mécanisme d'embrayage et, par l'intermédiaire d'un renvoi 4, avec la roue menante 5b du deuxième mécanisme d'embrayage. Ce quatrième mode de réalisation est caractérisé par le fait que les roues menées 7a et 7b forment un plateau de jonction 9 dans lequel sont formées de part et d'autre les cuvettes 11 a, 11 b destinées à recevoir les mécanismes 10a, 10b, qui dans ce cas ont la même orientation, mais permettent d'avoir des actions inversées en raison du renvoi 4. Le fonctionnement ne sera pas expliqué car il découle naturellement de ce qui a été dit pour le troisième mode de réalisation.

Un tel mécanisme inverseur peut être utilisé dans un tout petit appareil portable pour alimenter sa source d'énergie mécanique ou électrique, tel qu'une montre-bracelet, lorsque le pignon moteur est entraîné par une masse oscillante. Il peut également trouver d'autres applications, par exemple pour la tige de remontoir en prévoyant un engrenage à pignons coniques.

L'invention n'est pas limitée aux modes de réalisation qui viennent d'être décrits car l'homme de métier peut les adapter en fonction des besoins, par exemple pour un calibre particulier de montre, ou pour une application non horlogère

## Revendications

1. Mécanisme inverseur simple sens pour l'entraînement unidirectionnel du premier mobile (1) d'une chaîne cinématique comportant un pignon moteur (3) à mouvement oscillant en prise avec une roue menante (5) montée sur un axe de rotation (6) au dessus d'une roue menée (7) montée sur le même axe (6), en prise, directement ou indirectement, avec ledit premier mobile (1) de la chaîne cinématique, et comportant une cuvette (11) ouverte vers la roue menante (5) pour loger un dispositif d'embrayage (10), réalisé en un matériau élastique permettant, à l'aide d'au moins un bras de blocage (12), de coupler/découpler les deux roues (5, 7) en fonction du sens de rotation du pignon moteur (3), **caractérisé en ce que** ledit au moins un bras de blocage (12) comporte une extrémité (14) comprenant un point de pivotement (14a, 14b) sur la roue menante (5) et une autre extrémité (16) comprenant un point d'appui (16a) contre la paroi interne (2) de la cuvette (11) de la roue menée (7) sous l'action d'un ressort (20).

2. Mécanisme inverseur selon la revendication 1, **caractérisé en ce que** le ressort (20) et le bras (12) sont réalisés en une seule pièce.

3. Mécanisme inverseur selon la revendication 1 ou 2, **caractérisé en ce que** le point de pivotement (14a) est constitué par un axe (24) fixé dans la roue menante (5) et autour duquel le bras de blocage (12) est mobile.

4. Mécanisme inverseur selon la revendication 1 ou 2, **caractérisé en ce que** le point de pivotement (14b) situé sur le bord d'une came (21) fixée dans la roue menante (5), le point de pivotement (14b) pouvant se déplacer sur ledit bord.

5. Mécanisme inverseur selon la revendication 4, **caractérisé en ce que** le contour de la came (21) correspond à une portion d'une spirale exponentielle.

6. Mécanisme inverseur selon la revendication 4 ou 5, **caractérisé en ce que** le bras de blocage (12) comporte, à l'opposé du point d'appui (16a), une extension de guidage (13) dont l'extrémité (13a) coopère avec la paroi (2) de la cuvette (11).

7. Mécanisme inverseur selon la revendication 4 ou 5, **caractérisé en ce que** le bras de blocage (12) comporte, à l'opposé du point d'appui (16a), une extension de guidage (13) dont l'extrémité (13a) coopère avec une plaque de guidage (26) fixée dans la roue menante (5).

8. Mécanisme inverseur selon l'une des revendications 4 à 7, **caractérisé en ce qu'**il comporte un dispositif de sécurité limitant la course du point de pivotement (14b) le long de came (24b).

9. Mécanisme inverseur selon la revendication 8, **caractérisé en que** le dispositif de sécurité consiste en un bec (15) qui coopère avec un décrochement (25), lesdits bec (15) et décrochement (25) étant formés respectivement à partir de l'extrémité (14) du bras de blocage (12) en appui sur la came (24b) et d'une portion non active de la came (24b) ou inversement.

10. Mécanisme inverseur selon une quelconque des revendication 3 à 9, **caractérisé en ce que** le bras de blocage (12) comporte en outre une extension d'équilibrage (17) permettant de faire coïncider le centre de gravité du dispositif d'embrayage avec l'axe de rotation (6) des roues (5, 7).

11. Mécanisme inverseur selon l'une des revendications précédentes, **caractérisé en ce que** la roue menante (5) et la roue menée (7) sont toutes les deux montées folles sur l'axe de rotation (6) en étant chacune pourvue d'une denture engrenant respectivement avec le pignon d'entraînement (3) et le premier mobile (1) de la chaîne cinématique.

12. Mécanisme inverseur selon l'une des revendications 1 à 10, **caractérisé en ce qu'**une roue (5 ou 7) est montée folle sur l'axe de rotation en étant pourvue d'une denture engrenant avec le pignon d'entraînement (3) ou le premier mobile (1) de la chaîne cinématique, l'autre roue (7 ou 5) étant chassée sur l'axe de rotation (6), son engrènement avec le premier mobile (1) ou le pignon d'entraînement (3) s'effectuant soit au moyen de sa denture propre, soit au moyen d'un pignon additionnel (8) également assujetti à l'axe de rotation (6).

13. Mécanisme inverseur selon l'une des revendications précédentes, **caractérisé en ce que** le pignon moteur (3) est mis en mouvement par une masse oscillante.

14. Mécanisme inverseur double sens, **caractérisé en ce qu'**il comporte deux mécanismes inverseurs simple sens selon l'une quelconque des revendications précédentes, disposés dans le même plan, dont les roues menantes (5a, 5b) engrènent chacune avec le pignon moteur (3) à mouvement oscillant, dont les roues menées (7a, 7b) engrènent l'une avec l'autre, et dont les dispositifs d'embrayages (10a, 10b) ont des actions inversées.

15. Mécanisme inverseur double sens, **caractérisé en ce qu'**il comporte deux mécanismes inverseurs simple sens selon l'une quelconque des revendications 1 à 13, disposés l'un au dessus de l'autre, l'une des roues menantes (5a) étant directement en prise le pignon moteur (3) l'autre roue menante (5b) étant avec un renvoi (4) lui-méme en prise avec le pignon moteur (3), les dispositifs d'embrayage (10a, 10b) ayant des actions inversées.

16. Mécanisme inverseur double sens selon la revendication 15, **caractérisé en ce que** les roues menées (7a, 7b) forment une seule pièce (9) dont les cuvettes (11a, 11b) sont disposées de part et d'autre d'un plateau de jonction (19).

17. Mécanisme inverseur selon l'une des revendications 1 à 13, **caractérisé en ce que** le matériau élastique est choisi parmi les métaux ou alliages, ou les matériaux cristallins ou amorphe, tel que le silicium et ses dérivés, ou le quartz.

18. Pièce d'horlogerie comportant un mécanisme inverseur selon une quelconque des revendications précédentes.

19. Pièce d'horlogerie selon la revendication 18, **caractérisée en ce que** la chaîne cinématique permet le remontage automatique du barillet d'un mouvement mécanique.

## Claims

1. Single direction reverser mechanism for the uni-directional driving of the first wheel set (1) of a kinematic chain including a drive pinion (3) with an oscillating movement meshed with a driving wheel (5) mounted on an arbour (6) above a driven wheel (7) mounted on the same arbour (6), meshed, directly or indirectly, with said first wheel set (1) of the kinematic chain, and including a dome (11) open towards the driving wheel (5) to house a coupling device (10), made of a resilient material for coupling/uncoupling, with help of at least a locking arm (12), the two wheels (5, 7) as a function of the direction ofrotation of the drive pinion (3), **characterized in that** said at least one locking arm (12) includes one end (14) having a pivoting point (14a, 14b) on the driving wheel (5) and an other end (16) having a point of abutment (16a) against the inner wall (2) of the dome (11) of the driven wheel (7) via the action of a spring (20).

2. Reverser mechanism according to claim 1, **characterized in that** the spring (20) and the arm (12) are made in a single piece.

3. Reverser mechanism according to claim 1 or 2, **characterized in that** the pivoting point (14a) is formed by an arbour (24a) fixed in the driving wheel (5) and about which the locking arm (12) is mobile.

4. Reverser mechanism according to claim 1 or 2, **characterized in that** the pivoting point (14b) is situated on the edge of a cam (21) fixed in the driving wheel (5), the pivoting point (14b) being able to move onto said edge.

5. Reverser mechanism according to claim 4, **characterized in that** the contour of the cam (21) corresponds to a portion of an exponential spiral.

6. Reverser mechanism according to claim 4 or 5, **characterized in that** the locking arm (12) includes, opposite the point ofabutment (16a), a guide extension (13), the end (13a) of which cooperates with the wall (2) of the dome (11).

7. Reverser mechanism according to claim 4 or 5, **characterized in that** the locking arm (12) includes, opposite the abutment point (16a), a guide extension (13), the end (13a) of which cooperates with a guide plate (26) fixed in the driving wheel (5).

8. Reverser mechanism according to any of the claims 4 to 7, **characterized in that** it includes a security device limiting the travel of the pivoting point (14b) along the cam (24b).

9. Reverser mechanism according to claim 8, **characterized in that** the security mechanism consists of a beak (15) which cooperates with a recess (25), said beak (15) and recess (25) being formed respectively from the end (14) of the locking arm (12) abutting the cam (24b) and a non-active portion of the cam (24b) or vice versa.

10. Reverser mechanism according to any of claims 3 to 9, **characterized in that** the locking arm (12) further includes a balance extension (17) for making the centre of gravity of the coupling device coincide with the arbour (6) of the wheels (5, 7).

11. Reverser mechanism according to any of the preceding claims, **characterized in that** the driving wheel (5) and the driven wheel (7) are both freely mounted on the arbour (6) each being provided with a toothing respectively meshing with the drive pinion (3) and the first wheel set (1) of the kinematic chain.

12. Reverser mechanism according to any of claim 1 to 10, **characterized in that** one wheel (5 or 7) is freely mounted on the arbour and provided with a toothing meshing with the drive pinion (3) or the first wheel set (1) of the kinematic chain, the other wheel (7 or 5) being driven onto the arbour of rotation (6), meshing with the first wheel set (1) or the drive pinion (3) either by means of its own toothing, or by means of an additional pinion (8) that is also secured to the arbour (6).

13. Reverser mechanism according to any of the preceding claims, **characterized in that** the drive pinion (3) is set in motion by an oscillating weight.

14. Double direction reverser mechanism, **characterized in that** it includes two single direction reverser mechanism according to any of the preceding claims, arranged in the same plane, whose driving wheels (5a, 5b) each mesh with the drive pinion (3) with an oscillating motion, whose driven wheels (7a, 7b) mesh with each other, and whose coupling devices (10a, 10b) have opposite actions.

15. Double direction reverser mechanism, **characterized in that** it includes two single direction reverser mechanism according to any of claims 1 to 13, arranged one above the other, one of the driving wheels (5a) being directly meshed with the drive pinion (3) and the other driving wheel (56) being meshed with an intermediate wheel (4) itself meshed with the drive pinion (3), the coupling devices (10a, 10b) having opposite actions

16. Double direction reverser mechanism according to claim 15, **characterized in that** the driven wheels (7a, 7b) form a single piece (9) whose domes (11a, 11b) are arranged on either side of a junction plate (19).

17. Reverser mechanism according to any of claims 1 to 13, **characterized in that** the resilient material is selected from among metals or alloys, or crystalline or amorphous materials, such as silicon and silicon derivatives, or quartz.

18. Timepiece including a reverser mechanism according to any of the preceding claims.

19. Timepiece according to claim 18, **characterized in that** the kinematic chain automatically winds the barrel of a mechanical movement.

## Patentansprüche

1. Einzelrichtungs-Umkehrmechanismus für den unidirektionalen Antrieb des ersten beweglichen Elements (1) einer kinematischen Kette, die ein Antriebsritzel (3) mit oszillierender Bewegung enthält, das mit einem führenden Rad (5) in Eingriff ist, das an einer Drehwelle (6) über einem geführten Rad (7) angebracht ist, das an derselben Welle (6) angebracht ist und direkt oder indirekt mit dem ersten beweglichen Element (1) der kinematischen Kette in Eingriff ist, und eine zu dem führenden Rad (5) hin offene Mulde (11) aufweist, um eine Kupplungsvorrichtung (10) aufzunehmen, die aus einem elastischen Material hergestellt ist und ermöglicht, mit Hilfe wenigstens eines Blockierarms (12) die beiden Räder (5, 7) in Abhängigkeit von dem Drehsinn des Antriebsritzels (3) zu koppeln/entkoppeln, **dadurch gekennzeichnet, dass** der wenigstens eine Blockierarm (12) ein Ende (14), das einen Schwenkpunkt (14a, 14b) an dem führenden Rad (5) aufweist, und ein weiteres Ende (16), das einen Punkt (16a) für die Abstützung an der Innenwand (2) der Mulde (11) des geführten Rads (7) unter der Wirkung einer Feder (20) aufweist, umfasst.

2. Umkehrmechanismus nach Anspruch 1, **dadurch gekennzeichnet, dass** die Feder (20) und der Arm (12) einteilig ausgebildet sind.

3. Umkehrmechanismus nach Anspruch 1 oder 2, **dadurch gekennzeichnet, dass** der Schwenkpunkt (14a) durch eine Welle (24) gebildet ist, die in dem führenden Rad (5) befestigt ist und um die der Blockierarm (12) beweglich ist.

4. Umkehrmechanismus nach Anspruch 1 oder 2, **dadurch gekennzeichnet, dass** sich der Schwenkpunkt (14b) am Rand eines Exzenters (21) befindet, der in dem führenden Rad (5) befestigt ist, wobei sich der Schwenkpunkt (14b) an dem Rand verlagern kann.

5. Umkehrmechanismus nach Anspruch 4, **dadurch gekennzeichnet, dass** der Umriss des Exzenters (21) einem Abschnitt einer exponentiellen Spirale entspricht.

6. Umkehrmechanismus nach Anspruch 4 oder 5, **dadurch gekennzeichnet, dass** der Blockierarm (12) gegenüber dem Abstützpunkt (16a) eine Führungsverlängerung (13) aufweist, wovon das Ende (13a) mit der Wand (2) der Mulde (11) zusammenwirkt.

7. Umkehrmechanismus nach Anspruch 4 oder 5, **dadurch gekennzeichnet, dass** der Blockierarm (12) gegenüber dem Abstützpunkt (16a) eine Führungsverlängerung (13) aufweist, wovon das Ende (13a) mit einer im führenden Rad (5) befestigten Führungsplatte (26) zusammenwirkt.

8. Umkehrmechanismus nach einem der Ansprüche 4 bis 7, **dadurch gekennzeichnet, dass** er eine Sicherheitsvorrichtung umfasst, die die Bahn des Schwenkpunkts (14b) längs des Exzenters (24b) begrenzt.

9. Umkehrmechanismus nach Anspruch 8, **dadurch gekennzeichnet, dass** die Sicherheitsvorrichtung aus einer Spitze (15) besteht, die mit einem Rücksprung (25) zusammenwirkt, wobei die Spitze (15) ausgehend von dem Ende (14) des Blockierarms (12) abgestützt auf dem Exzenter (24b) und der Rücksprung (25) ausgehend von einem inaktiven Abschnitt des Exzenters (24b) oder umgekehrt gebildet ist.

10. Umkehrmechanismus nach einem der Ansprüche 3 bis 9, **dadurch gekennzeichnet, dass** der Blockierarm (12) außerdem eine Ausgleichsverlängerung (17) umfasst, die ermöglicht, den Schwerpunkt der Kupplungsvorrichtung mit der Drehachse (6) der Räder (5, 7) in Übereinstimmung zu bringen.

11. Umkehrmechanismus nach einem der vorhergehenden Ansprüche, **dadurch gekennzeichnet, dass** sowohl das führende Rad (5) als auch das geführte Rad (7) an der Drehachse (6) beweglich angebracht sind, wobei sie jeweils mit einer Zahnung versehen sind, die mit dem Antriebsritzel (3) bzw. mit dem ersten beweglichen Element (1) der kinematischen Kette in Eingriff ist.

12. Umkehrmechanismus nach einem der Ansprüche 1 bis 10, **dadurch gekennzeichnet, dass** ein Rad (5 oder 7) an der Drehachse beweglich angebracht ist, wobei es mit einer Zahnung versehen ist, die mit dem Antriebsritzel (3) oder mit dem ersten beweglichen Element (1) der kinematischen Kette in Eingriff ist, während das andere Rad (7 oder 5) auf die Drehachse (6) getrieben ist, wobei sein Eingriff mit dem ersten beweglichen Element (1) oder mit dem Antriebsritzel (3) entweder mittels seiner eigenen Zahnung oder mittels eines zusätzlichen Ritzels (8), das ebenfalls an der Drehachse (6) befestigt ist, erfolgt.

13. Umkehrmechanismus nach einem der vorhergehenden Ansprüche, **dadurch gekennzeichnet, dass** das Antriebsritzel (3) durch eine oszillierende Masse in Bewegung versetzt wird.

14. Doppelrichtungs-Umkehrmechanismus, **dadurch gekennzeichnet, dass** er zwei Einzelrichtungs-Umkehrmechanismen nach einem der vorhergehenden Ansprüche umfasst, die in derselben Ebene angeordnet sind, deren führende Räder (5a, 5b) jeweils mit dem Antriebsritzel (3) mit oszillierender Bewegung in Eingriff sind, deren geführte Räder (7a, 7b) miteinander in Eingriff sind und deren Kupplungsvorrichtungen (10a, 10b) entgegengesetzte Wirkungen haben.

15. Doppelrichtungs-Umkehrmechanismus, **dadurch gekennzeichnet, dass** er zwei Einzelrichtungs-Umkehrmechanismen nach einem der Ansprüche 1 bis 13 umfasst, die übereinander angeordnet sind, wobei eines der führenden Räder (5a) direkt mit dem Antriebsritzel (3) in Eingriff ist, während das andere führende Rad (5b) mit einem Vorgelege (4) in Eingriff ist, das seinerseits mit dem Antriebsritzel (3) in Eingriff ist, wobei die Kupplungsvorrichtungen (10a, 10b) entgegengesetzte Wirkungen haben.

16. Doppelrichtungs-Umkehrmechanismus nach Anspruch 15, **dadurch gekennzeichnet, dass** die geführten Räder (7a, 7b) ein einziges Teil (9) bilden, dessen Mulden (11a, 11b) beiderseits einer Verbindungsplatte (19) angeordnet sind.

17. Umkehrmechanismus nach einem der Ansprüche 1 bis 13, **dadurch gekennzeichnet, dass** das elastische Material aus Metallen oder Legierungen oder kristallinen oder amorphen Materialien wie etwa Silicium und seinen Derivaten oder Quarz gewählt ist.

18. Zeitmessgerät, das einen Umkehrmechanismus nach einem der vorhergehenden Ansprüche enthält.

19. Zeitmessgerät nach Anspruch 18, **dadurch gekennzeichnet, dass** die kinematische Kette den automatischen Aufzug des Federgehäuses eines mechanischen Gangwerks ermöglicht.
